# EUROPEAN PATENT SPECIFICATION

(11) **EP 1 381 015 B1**
(45) Date of publication and mention of the grant of the patent: **21.10.2009**
(21) Application number: 03254039.5
(22) Date of filing: 25.06.2003
(51) Int. Cl.: G09G 3/20, G09G 3/36

(54) **Electro-optical device, drive device and drive method for electro-optical device, and electronic apparatus**
Elektrooptische Vorrichtung, Steuervorrichtung und -verfahren für eine elektrooptische Vorrichtung, und elektronisches Gerät
Dispositif électrooptique, dispositif de commande et procédé de commande pour un dispositif électrooptique, et appareil électronique

(30) Priority: 11.07.2002 JP 2002203002; 02.05.2003 JP 2003127325
(43) Date of publication of application: 14.01.2004
(73) Proprietor: Seiko Epson Corporation, Shinjuku-ku Tokyo 163-0811 (JP)
(72) Inventor: Aoki, Toru, Suwa-shi, Nagano-ken 392-8502 (JP); Ishii, Kenya, Suwa-shi, Nagano-ken 392-8502 (JP)
(74) Representative: Sturt, Clifford Mark

(56) References cited:
- EP-A- 0 927 986
- GB-A- 2 326 013
- GB-A- 2 341 714

## Description

The present invention relates to the technical field of electro-optical devices such as liquid crystal devices. More particularly, the present invention relates to the technical fields of a type of electro-optical device that has transistors for controlling the switching of pixel electrodes arranged in a matrix and that performs active-matrix driving by sequentially supplying scan signals to scan lines provided for corresponding pixel rows, a drive device and a drive method which are preferably used for such an electro-optical device, and an electronic apparatus having such an electro-optical device.

The electro-optical device of this type has, in an image display area on a substrate, pixel electrodes, thin-film transistors (hereinafter referred to "TFTs" as appropriate) for switching the pixel electrodes, scan lines for supplying scan signals to the corresponding TFTs, data lines for supplying image signals to the sources of the TFTs, storage capacitors connected to the pixel electrodes, and the like. Drive circuits, including a scan-line drive circuit for supplying scan signals to the scan lines, a data-line drive circuit for supplying image signals to the data lines, and a sampling circuit, are provided at peripheral regions located around the image display area.

More specifically, the scan-line drive circuit line-sequentially supplies a scan signal having a pulsed waveform for each scan line or each row. That is, scan signals are supplied such that, at the same time when TFTs that are connected to the mth row (m is a natural number) are turned off, TFTs that are connected to the (m+1)th scan line are turned on. In parallel, the data-line drive circuit supplies image signals to the respective data lines in each horizontal-scanning period so as to write the image signals to corresponding pixel electrodes from the sources of the TFTs that are turned on by the scan signals through the drains thereof. The supply of such scan signals and image signals then causes the writing of an image for one row in a single horizontal-scan period. In addition, the electro-optical device is configured such that the above write operation is sequentially performed on all the rows in a vertical scan period to thereby write an image corresponding to one frame.

However, since the TFTs, the scan lines, capacitance lines, the data lines, and the like are fabricated in gaps between the pixel electrodes that are arranged in a plain matrix, parasitic capacitances are generated between the pixel electrodes in the (m+1)th row and the drains of the TFTs, the scan lines, the capacitance lines, and the like in the mth row. As a result, when the TFTs in the (m+1)th row are turned on by using scan signals having a pulsed waveform at a moment when the TFTs in the mth row are turned off, a scan signal or the like in the (m+1)th row is introduced as noise into an image signal written into the pixel electrodes in the mth row. This causes the pixel potentials, which are essentially to be held by the corresponding pixel electrodes, to fluctuate. In particular, since the parasitic capacitances are different depending on pixel units, there is a problem in that pixel irregularities occur in an image that is eventually displayed.

Furthermore, the above problem becomes more severe as the pixel pitch is reduced so as to meet a common requirement for higher definition of a displayed image in the art, since the parasitic capacitances between the pixel electrode in the (m+1)th row and the drains of the TFTs, the scan lines, the capacitance lines, and the like in the mth row become relatively large as the pixel pitch is increased.

Additionally, the waveform of scan signals is rounded depending on the corresponding wire capacitances. Thus, the degree to which the waveform of scan signals is rounded is greater at the center portion, which is farther from the scan-line drive circuit, of the image display area than at a peripheral portion, which is adjacent to the scan-line drive circuit, of the image display region. Thus, the ON/OFF timings of the TFTs are different between the peripheral portion and the center portion, depending on the degree to which the waveform of the scan signals is rounded. As a result, the influences of noise due to the next row's scan signal that is introduced into an image signal when the TFTs are turned off, as described above, are also different from each other between the peripheral portion and the center portion. Thus, in particular, in order to prevent flicker and/or aging of liquid crystal and the like, when AC inversion driving in which a drive potential of each pixel electrode is inverted in each field period or the like is adopted, adjusting the potential of the opposing electrode such that no DC component is generated in a potential applied to the liquid crystal causes such a DC component to be generated at the peripheral portion. Conversely, adjusting the potential of the scan signal or the like such that no DC component is generated in a potential applied to the liquid crystal at the peripheral portion of the image display area causes such a DC component to be generated at the center portion.

For these reasons, there is a problem in that flicker is generated at the peripheral portion or the center portions.

Meanwhile, when the mth-row's scan line and the mth-row's TFTs that are driven therethrough are considered, the pulsed waveform of a scan signal affects the pixel potentials at the drains of the TFTs since parasitic capacitances exist between the scan line and the drains. Specifically, at a moment when the corresponding gates are turned off, a pulsed potential corresponding to a pulsed waveform in the scan line is superimposed as noise on the potential of an image signal and the resulting potential is held as a pixel potential. Thus, in this case, the influences of noise introduced to image signals are different from each other between the peripheral portion and the center portion, because the degrees to which the waveform of the scan signals is rounded are different between the peripheral portion and the center portion. As a result, potentials applied to the liquid crystal are different and the luminance levels are also different. There is also a problem in that flicker is generated at either of the peripheral portion and the center portion. In order to prevent the generation of such flicker, Japanese Unexamined Patent Application Publication No. 6-110035 discloses a technique for shaping the rising waveform of a scan signal not into a rectangular waveform but into a ramp waveform or a stepped waveform. This approach, however, cannot prevent the generation of pixel irregularities and flicker which result from parasitic capacitances between the pixel electrodes in the (m+1)th row and the drains of the TFTs, scan lines, capacitance lines, and the like in the mth row.

UK patent application no. 2326013A, published on 9th December 1998, discloses a low-power gate driver circuit for a TFT liquid-crystal display comprising a switching device, which is disposed between each of the gate lines, and recycles the electric charge by discharging the electric charge which is stored on a capacitor of a gate line to a capacitor of another gate line, thereby reducing the power consumed by the gate driver. The gate driver consists of a first switching unit including a shift register, respective buffers fed by the outputs of the shift register, respective switches, which are operated in common by a signal, to provide respective signals, and a second switching unit, which contains a series of switches. These switches connect adjacent scanning lines together.

In accordance with a first aspect of the invention an electro-optical device comprises the features recited in claim 1.

According to this aspect, a period in which a scan signal that precedes in a scan line in the mth row changes from the high potential to the intermediate potential and a period in which a scan signal that follows in the scan line in the (m+1)th row changes from the low potential to the intermediate potential overlap with each other. Thus, even when a scan signal or the like in the (m+1)th row is introduced as noise into an image signal written into the pixel electrode in the mth row, the amount of noise can be reduced compared to a case in whch the scan signals are changed directly between the high potential and the low potential.

The invention in a second aspect thereof provides a drive device for an electro-optical device as claimed in claim 11.

Three drive methods for an electro-optical device are as set forth in claims 14, 16 and 17 and constitute third, fourth and fifth aspects of the invention, respectively.

A sixth aspect of the invention relates to an electronic apparatus as claimed in claim 18, while two further forms of an electro-optical device, claimed in claims 19 and 20, constitute seventh and eighth aspects. Embodiments of the invention are set forth in the dependent claims.

Such effects and other advantages of the present invention will be more apparent from the embodiments described below.

Embodiments of the present invention will now be described by way of further example only and with reference to the accompanying drawings, in which:-
Fig. 1 is a circuit diagram showing an equivalent circuit of various elements, wires and the like which are provided for a plurality of pixels that are formed in a matrix to constitute an image display area in an embodiment of an electro-optical device of the present invention, in conjunction peripheral drive circuits therefor.
Fig. 2 is a plan view of a TFT-array substrate on which data lines, scan lines, pixel electrodes, and the like are formed, in the electro-optical device of this embodiment.
Fig. 3 is a timing chart of a data signal, scan signals, and the like in a comparative example.
Fig. 4 is a block diagram of a middle-stage wave circuit and a scan-signal supply circuit in this embodiment.
Fig. 5 is a timing chart of a data signal, scan signals, and the like in this embodiment.
Fig. 6 is a timing chart showing the timings of a data-line drive signal and scan signals in a second embodiment of the present invention.
Fig. 7 is a block diagram of middle-stage wave circuits and a scan-signal supply circuit in the second embodiment.
Fig. 8 is a plan view of a TFT-array substrate in the electro-optical device of this embodiment and various elements formed thereon, which is viewed from the side of the opposing substrate.
Fig. 9 is a cross-sectional view taken along the line H-H' shown in Fig. 8.
Fig. 10 is a schematic sectional view showing a color liquid-crystal projector, which is one example of a projection-type color display apparatus, according to an embodiment of an electronic apparatus of the present invention.

Embodiments described below are directed to a case in which an electro-optical device of the present invention is applied to a liquid crystal device.

### (First Embodiment)

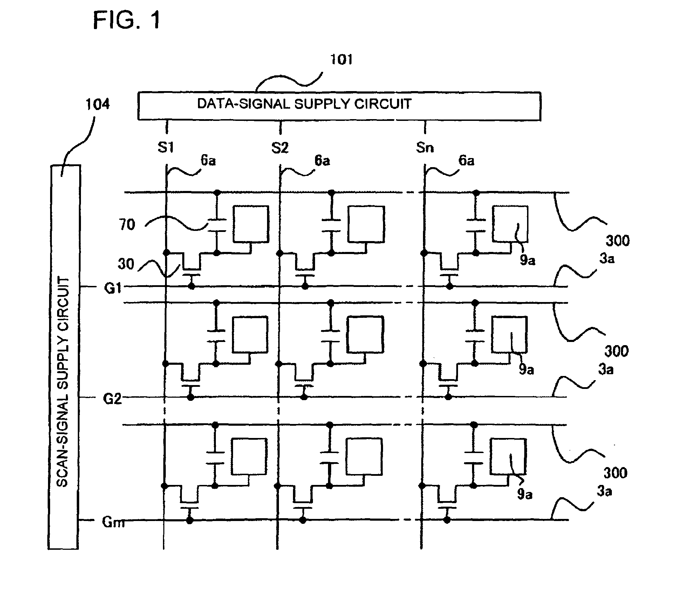

A first embodiment of an electro-optical device of the present invention will be described with reference to Figs. 1 to 5.

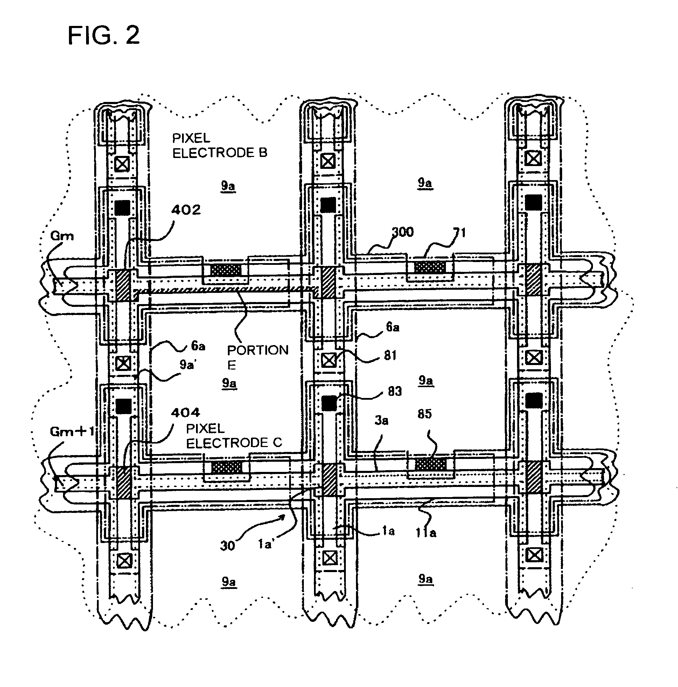

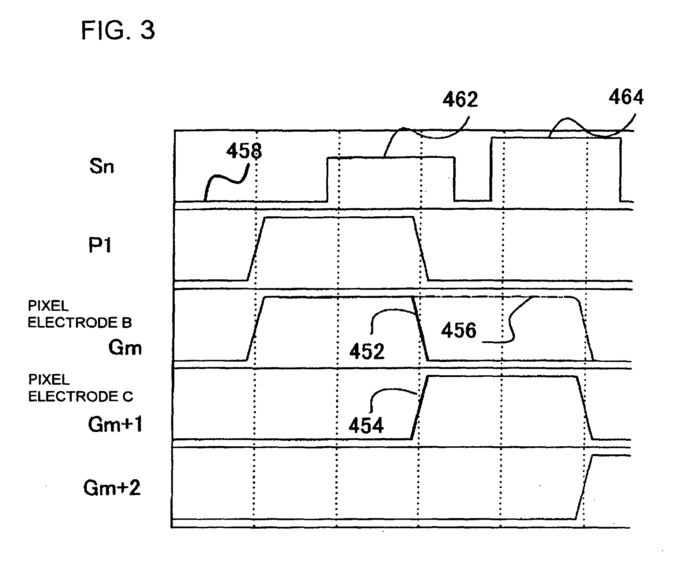

First, the basic configuration of the electro-optical device of the first embodiment will be described with reference to Figs. 1 to 3. Fig. 1 is a circuit diagram showing an equivalent circuit of various elements, wires, and the like for a plurality of pixels that are formed in a matrix to constitute the image display area of the electro-optical device, in conjunction with peripheral drive circuits therefor. Fig. 2 is a plan view of a group of multiple pixels that are adjacent to each other on a TFT-array substrate on which data lines, scan lines, pixel electrodes, and the like are formed. Fig. 3 is a timing chart of a data signal, scan signals, and the like in a comparative example.

Referring to Fig. 1, the plurality of pixels, which are formed in a matrix to constitute the image display area of the electro-optical device of this embodiment, have respective pixel electrodes 9a and TFTs 30 for controlling the switching of the corresponding pixel electrodes 9a. Data lines 6a, through which image signals are supplied, are electrically connected to the sources of the corresponding TFTs 30. Scan lines 3a, through which scan signals are supplied, are electrically connected to the gates of the corresponding TFTs 30. The pixel electrodes 9a and storage capacitors 70 are electrically connected to the drains of the corresponding TFTs 30.

The electro-optical device has a data-signal supply circuit 101 and a scan-signal supply circuit 104 in peripheral regions located around the image display area.

The data-signal supply circuit 101 includes a data-line drive circuit, a sampling circuit, and the like. The data-signal supply circuit 101 is configured to sample image signals on image signal lines at a predetermined timing and to sequentially write image signals S1, S2, ..., and Sn to the corresponding data lines 6a.

On the other hand, the scan-signal supply circuit 104 is configured to line-sequentially supply scan signals G1, G2, ..., and Gm in this order in a pulse manner to the corresponding scan lines 3a at a predetermined timing.

In this embodiment, particularly, the scan signals G1, G2, ..., and Gm not only have a potential of a high level, which puts the TFTs 30 into an ON-state, and a potential of a low level, which puts the TFTs 30 into an OFF-state, but also can have a potential of a middle level that puts the TFTs 40 into an incomplete ON-state or an incomplete OFF-state. The details of such scan signals will be described later.

In the image display area, the scan-signal supply circuit 104 line-sequentially supplies the scan signals G1, G2, ..., and Gm to the gates of the TFTs 30 through the scan lines 3a. The switches of the TFTs 30, which serve as pixel switching elements, are closed for a certain period of time, so that the image signals S1, S2, ..., and Sn, which are supplied through the data lines 6a, are written into the pixel electrodes 9a at a predetermined timing. The image signals S1, S2, ..., and Sn, which are at certain levels and which are written into liquid crystal, which is one example of electro-optic material, via the pixel electrodes 9a, are held for a certain period of time between the pixel electrodes 9a and an opposing electrode formed on an opposing substrate, which is described below. Liquid crystal allows modulation of light by varying the orientation and order of its molecular association in accordance with the level of an applied voltage, thereby allowing for gray scale display. For a normally white mode, a transmittance for incident light is reduced for each pixel unit in accordance with an applied voltage, and for a normally black mode, a transmittance for incident light is increased for each pixel unit in accordance with an applied voltage. The electro-optical device as a whole emits light rays having contrasts in accordance with image signals. In this case, in order to prevent leakage of the held image signals, the storage capacitors 70 are provided in parallel with liquid-crystal capacitors that are formed between the pixel electrodes 9a and the opposing electrode. Each storage capacitor 70, as will be described below in detail, includes an image-potential-side capacitance electrode, which is connected to the corresponding pixel electrode 9a, and a fixed-potential-side capacitance electrode, which is arranged so as to oppose the image-potential-side capacitance electrode with a dielectric film interposed therebetween. Capacitance lines 300 having a fixed potential are arranged in parallel with the scan lines 3a, and a part of each capacitance line 300 serves as the fixed-potential-side capacitance electrode.

Next, as shown in Fig. 2, the plurality of transparent pixel electrodes 9a (whose contours are represented by dotted lines 9a') are provided in a matrix on the TFT-array substrate of the electro-optical device, and the data lines 6a and the scan lines 3a are respectively provided along the vertical borders and the horizontal borders of the pixel electrodes 9a.

The scan lines 3a are arranged so as to face channel regions 1a', which are each indicated by a region of right-upward slanted lines in Fig. 2, in a semiconductor layer 1a. The scan lines 3a include gate electrodes. The scan lines 3a are designed such that the width of portions for the gate electrodes that face the channel regions 1a' is wider.

In this manner, the pixel-switching TFTs 30, in which parts of the scan lines 3a are arranged as the gate electrodes so as to face the channel regions 1a, are arranged at the corresponding intersections of the scan lines 3a and the main line portions of the data lines 6a.

A relay layer 71 is provided so as to serve as the pixel-potential-side capacitance electrodes, which are connected to the heavily-doped drain regions of the TFTs 30 and the pixel electrodes 9a. Parts of each capacitance line 300, which serve as the fixed-potential-side capacitance electrodes, are provided above the relay layer 71 along the scan line 3a. These are arranged so as to oppose each other with a dielectric film therebetween to form storage capacitances that are connected to the pixel electrodes 9a. The capacitance lines 300 extend along the corresponding scan lines 3a in a striped pattern in plan view and have portions that protrude upward and downward in Fig. 2 at portions that overlap the TFTs 30. Lower light-shielding films 11a are formed on the TFT-array substrate 10 in a lattice below the TFTs 30. Interlayer insulating films are formed on the scan lines 3a. The interlayer insulating films each have therein a contact hole 81, communicating from the data line 6a to the heavily-doped source region, and a contact hole 83, communicating from the relay layer 71 to the heavily-doped drain region. Interlayer insulating films having therein contact holes 85, communicating from the pixel electrodes 9a to the relay layer 71, are formed on the data lines 6a. Further, the pixel electrodes 9a are provided on the interlayer insulating films.

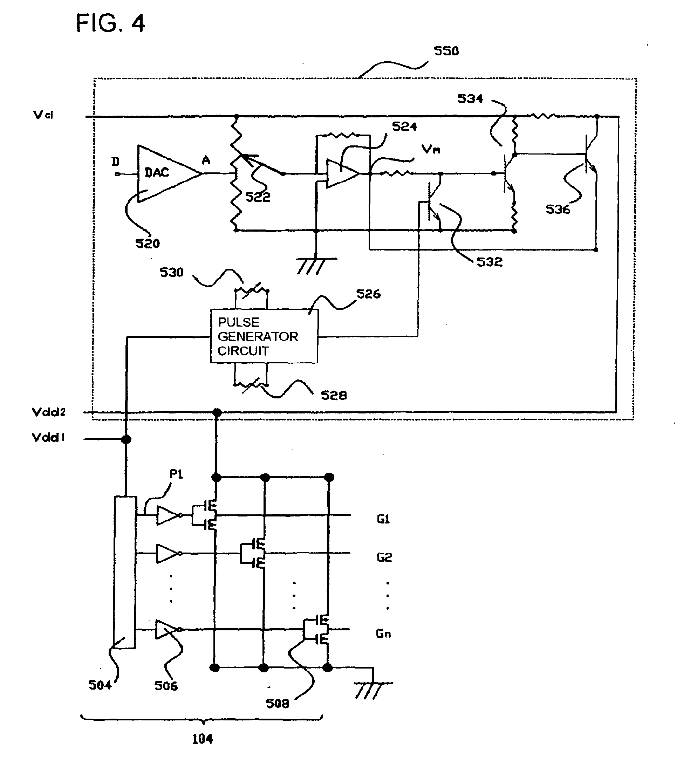

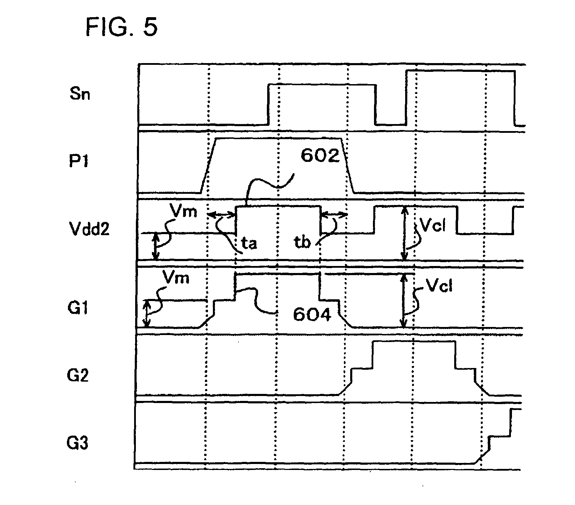

Next, the above-described scan-signal supply circuit will be explained in detail with reference to Figs. 1 to 5. Fig. 3 is a timing chart of a data signal, scan signals, and the like in a comparative example. Fig. 4 is a block diagram of a middle-stage wave circuit and the scan-signal supply circuit in this embodiment and Fig. 5 is a timing chart of a data signal, scan-signals, and the like in this embodiment.

In this embodiment, all the pixel electrodes 9a are driven using potentials with the same polarity in the same field and also field inversion driving in which the potentials are inverted in a field period. That is, image signals supplied from the data-signal supply circuit 101 are image signals that are AC-inverted for each field unit.

In Fig. 2, the gate of the TFT 30 that is connected to a pixel electrode B, located in the mth row, of the pixel electrodes 9a, is indicated as a gate 402, and a scan signal that is supplied to the gate 402 is indicated as a scan signal Gm. Meanwhile, the gate of the TFT 30 that is connected to a pixel electrode C, located in the (m+1)th row, of the pixel electrodes 9a, is indicated as a gate 404, and a scan signal that is supplied to the gate 404 is indicated as a scan signal Gm+1.

In the configuration shown in Fig. 2, the scan line 3a through which the scan signal Gm is supplied is overlapped by a portion E, shown by hatching, of the pixel electrode C in the next row. Since the interlayer insulating film provided between the overlapping portions is relatively thin, a parasitic capacitance is generated therebetween. In addition, with regard to the drain of the TFT 30, the data line 6a, and the capacitance line 300, a parasitic capacitance is generated to a greater or lesser degree between them and the pixel electrode C in the next row.

Thus, with this configuration, if scan signals Gm, Gm+1, ..., each having a pulsed rectangular-wave, are supplied from the scan-signal supply circuit 104 such that the TFTs 30 in the (m+1)th row are put into the ON state at a moment when the TFTs 30 in the mth row are put into the OFF state, then the aforementioned parasitic capacitance causes scan signals, image signals, and the like in the (m+1)th row to be introduced as noise into the pixel potential of the pixel electrode B in the mth row.

More specifically, referring to Fig. 3, a shift-register circuit creates the basic waveform P1 for the scan signals G1 to Gm from a clock signal. The basic waveform P1 is a transfer output that is shifted in the order of the scan signals G1 to Gm. When the gate 404 for the pixel electrode C is opened at the rising edge 454 of the scan signal Gm+1 at a moment when the gate 402 for the pixel electrode B is about to close at the falling edge 452 of the scan signal Gm, a voltage at the pixel electrode C changes via the gate 404 and the voltage changes causes, for example, the potential of the scan signal Gm to change due to the aforementioned parasitic capacitance. As a result, for example, the falling edge 452 of the scan signal Gm fluctuates like a curve 456, thereby preventing the gate 402 of the pixel electrode B from closing. Thus, an image signal 464 to be written into the pixel electrode C is also introduced as noise into an image signal 462 to be written into the pixel electrode B. Such a change in writing potential causes pixel irregularities, since the aforementioned parasitic capacitance has irregularities for each pixel unit. With regard to an image (data) signal Sn shown in Fig. 3, due to the field inversion driving, the image signal 462 and the image signal 464 have the same polarity relative to, for example, a 0-V reference voltage 458.

Additionally, in the case of the comparative example shown in Fig. 3, in practice, the waveforms of the scan signals Gm, Gm+1, ... are rounded depending on the wiring capacitances of the corresponding scan lines 3a. Thus, depending on the degree to which the waveforms of scan signals are rounded, the ON/OFF timings of the TFTs 30 are different from each other between the peripheral portion and the center portion in the lateral direction in Figs. 1 and 2. As a result, noise influences that are caused by the next-row scan signal introduced into an image signal at a moment when the TFTs 30 are turned off, as described above, are different from each other between the peripheral portion and the center portion. Thus, in particular, in the case in which AC inversion driving in which a drive potential for each pixel electrode is inverted in a field period or the like is adopted, when the potential or the like of scan signals is adjusted such that such noise does not cause DC components to be generated in drive potentials at the center portion of the image display area, DC components are generated at the peripheral portion due to such noise. Conversely, when the potential or the like of scan signals is adjusted such that such noise dose not cause DC components to be generated in drive potentials at the peripheral portion, DC components are generated at the center portion due to such noise.

From the results described above, according to the comparative example shown in Fig. 3, pixel irregularities occur and also flicker is generated at the peripheral or center portion.

In contrast, in this embodiment, particularly as shown in Figs. 4 and 5, the scan-signal supply circuit 104 is configured so that a power-supply voltage Vdd2, which is to be supplied to buffer circuits 508 at its final stage, is changed by a middle-stage wave circuit 550 to two values, i.e., a voltage Vm and a voltage Vc1. With regard to the individual scan lines, in the middle of changing the potential of the scan signals G1 to Gm from a high potential Vc1 to a low potential 0, the potential of the scan signals G1 to Gm is held to an intermediate potential Vm for a predetermined period. Further, with regard to the individual scan lines, in the middle of changing the potential of the scan signals G1 to Gm from the low potential 0 to the high potential Vc1, the potential of the scan signals G1 to Gm is held to the intermediate potential Vm for a predetermined period.

The detailed configurations and operations of the scan-signal supply circuit 104 and the middle-stage wave circuit 550 configured as described above will now be described further with reference to Figs. 4 and 5.

Referring to Fig. 4, the scan-signal supply circuit 104 includes a shift-register circuit 504, inverter circuits 506, and buffer circuits 508. The shift-register circuit 504 creates the basic waveform P1 for the scan signals G1 to Gm, in accordance with a clock signal Vdd1. The basic waveform P1 is a transfer output that is shifted in the order of the scan signals G1 to Gm. The basic waveform P1 is passed through the inverter circuits 506 and the buffer circuits 508 to become the scan signals G1 to Gm each having a two-stage waveform as shown in Fig. 5.

The middle-stage wave circuit 550 includes a D/A converter (DAC) 520, variable registers 522, 528, and 530, an amplifier 524, transistors 532, 534, and 536, and a pulse generator circuit 526.

To determine the intermediate potential Vm, an output of the D/A converter 520 is input to the variable resistor 522. This is intended to allow the D/A converter 520 to determine an analog potential (A) from a digital signal (D) and to further allow the variable resistor 522 to also determine a potential. The impedance of an output of the variable resistor 522 is converted by the amplifier 524. An output of the amplifier 524 is set as the intermediate potential Vm.

Meanwhile, in accordance with the clock signal Vdd1, the pulse generator circuit 526 generates a pulse that rises with time ta later than the basic waveform P1 rises and that falls time tb earlier than the basic waveform P1 falls. In this case, the time ta and time tb can be changed by the variable resistors 528 and 530. An output of the pulse generator circuit 526 is passed through the transistor 532, thereby generating a pulse whose peak voltage is the intermediate potential Vm. The voltage level of this pulse is shifted by the transistor 534 and is further converted by the transistor 536 into a pulse whose peak voltage is the power-supply voltage Vc1 and whose lowest voltage is the intermediate potential Vm.

In this manner, the middle-stage wave circuit 550 generates a power-supply voltage Vdd2 as shown in Fig. 5. This power-supply voltage Vdd2 has a pulse whose lowest potential is the intermediate potential Vm, rises with the time ta later than the basic waveform P1 rises, reaches the peak-voltage power-supply voltage Vc1, falls with the time tb earlier than the basic waveform P1 falls, and reaches the intermediate potential Vm. The image signal Sn includes the falling edge of the pulse of the power-supply voltage Vdd2.

Such a power-supply voltage Vdd2 is input as a high-power supply to the source of a complementary TFT of each buffer circuit 508. In response, since the inverted waveform of the basic waveform, P1 is input to the gate of the complementary TFT of each buffer circuit 508, an output of the buffer circuit 508 has a waveform in which those waveforms are combined. That is, outputs of the buffer circuits 508 become scan signals G1, G2, ... having the two-stage waveform 604 shown in Fig. 5. More specifically, the scan signals G1, G2, ... having the two-stage waveforms 604 start from a ground reference voltage (0 V), rise at substantially the same time the basic waveform P1 rises, and reach the intermediate potential Vm. In this case, the scan signals are held to the intermediate potential Vm during the time ta. After the time ta, the scan signals further reach the potential of the power-supply voltage Vc1 and are held. This causes the gates of the pixel-switching TFTs to open, thereby starting the writing of the image signal Sn. Thereafter, the scan signals G1, G2, ... fall with the time tb earlier than the basic waveform P1 falls and reach the intermediate potential Vm. The scan signals G1, G2, ... fall to the ground reference potential (0 V) at substantially the same timing when the basic waveform P1 falls. Since the image signal Sn includes the falling edge of the scan signals, the gates of the pixel-switching TFTs are closed, thereby ending the writing of the image signal Sn.

The intermediate potential Vm of the scan signals G1, G2, ..., which are generated as described above to have the two-stage waveform, is set to a potential that puts the corresponding TFTs 30 into an incomplete ON state. Thus, when a component of a scan signal, image signal, or the like in the (m+1)th row is introduced due to the aforementioned parasitic capacitance as a noise component into a scan signal, image signal, or the like in the mth row, a potential variation due to the noise component can be reduced, compared to the case of the comparative example, shown in Fig. 3, in which the switching is performed directly between the complete ON state and the complete OFF state.

Referring to Figs. 1 and 2, as described above, at the time of turning off the TFTs 30 in the mth row, even when a scan signal or the like in the (m+1)th row is introduced as noise due to the aforementioned parasitic capacitance, this embodiment can reduce the amount of variation in the pixel potentials, which are essentially to be held by the corresponding image electrodes 9a, using the scan signals G1 to Gm having a two-stage waveform. Thus, pixel irregularities that occur in an image that is ultimately displayed can be reduced. In particular, even when the aforementioned parasitic capacitance is increased as a result of a reduction in the pixel pitch, an adverse effect therefrom on image quality can be reduced. In addition, when AC inversion driving is adopted, flicker can be reduced in both the center and peripheral portions of the image display area. Thus, eventually, it is possible to display a high-quality image having reduced image irregularities and flicker.

In the embodiment described above, the pixel-switching TFTs 30 are top-gate TFTs, but also may be bottom-gate TFTs. In addition, the TFTs 30 may be configured so as to include a single-crystal semiconductor layer using a bonding SOI (silicon on insulator) technology. Each switching TFT 30 preferably has an LDD (lightly doped drain) structure. The switching TFT 30, however, may have an offset structure in which no impurity ions are implanted into a lightly-doped source region 1b and a lightly-doped drain region 1c or may have a self-aligned TFT in which impurity ions are implanted using a gate electrode provided by a part of the scan line 3a as a mask and heavily-doped source and drain regions are formed in a self-aligned manner. In addition, this embodiment has a single-gate structure in which only one gate electrode of the pixel-switching TFT 30 is arranged between the heavily-doped source region 1d and the heavily-doped drain region 1e. Two or more gate electrodes, however, may also be arranged between those regions. Additionally, the advantages of reducing pixel irregularities and flicker according to this embodiment can equally be provided even when the present invention is applied to a reflective-type liquid-crystal device as well as a projection-type or transmissive-type liquid-crystal device.

### (Second Embodiment)

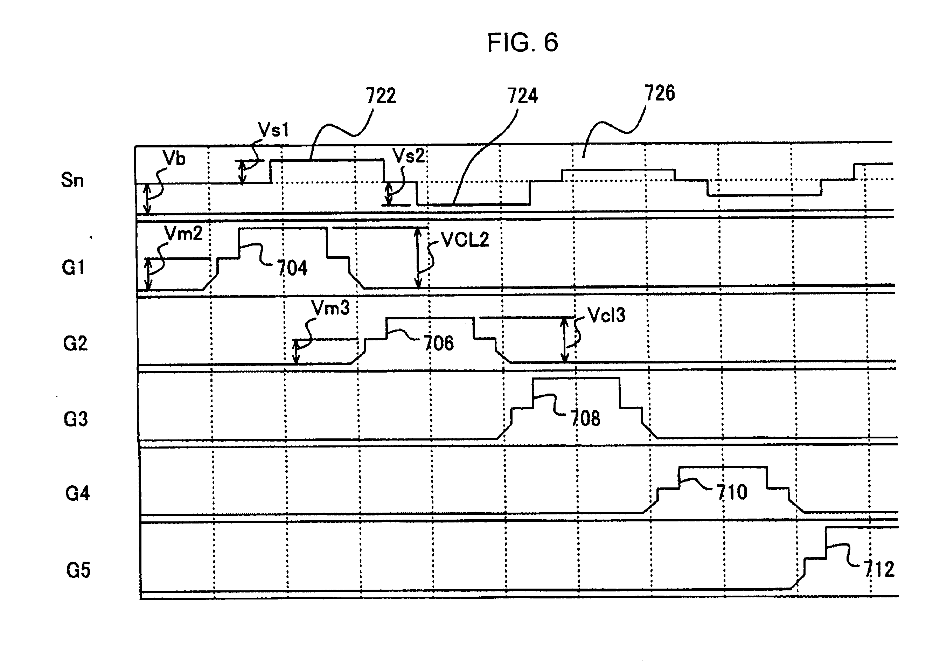

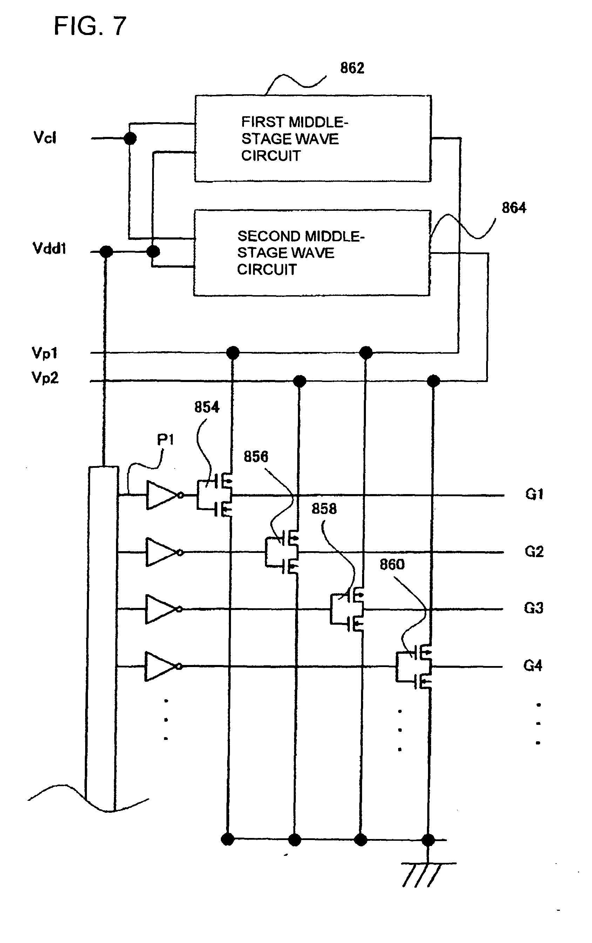

A second embodiment of the electro-optical device will now be described with reference to Figs. 6 and 7. Fig. 6 is a timing chart showing the timings of a data-line drive signal and scan signals in the second embodiment. Fig. 7 is a block diagram showing a scan-signal supply circuit and middle-stage wave circuits that are configured to generate two types of scan signals in this embodiment.

In the second embodiment, the pixel electrodes 9a in the same row are driven by potentials having the same polarity and 1H inversion driving in which the potential polarities are inverted for each row in a field period is performed. That is, image signals supplied from the data-signal supply circuit 101 are signals whose polarities are inverted for each field unit. This can effectively prevent deterioration resulting from application of a DC voltage to the liquid crystal. The basic configuration of the electro-optical device of this second embodiment is analogous to that of the first embodiment described with reference to Figs. 1 and 2.

That is, as shown in Fig. 6, in the second embodiment, the image signal Sn is inverted in its potential polarity relative to a fixed potential Vb for each horizontal-scanning period. More specifically, in Fig. 6, in the first horizontal-scanning period, a writing potential 722 of the image signal Sn is higher than the fixed potential Vb by Vsl, and in the next horizontal-scanning period, a writing potential 724 of the image signal Sn is lower than the fixed potential Vb by Vs2. Further, in the next horizontal-scanning period, a writing potential 726 of the image signal Sn is higher than the fixed potential Vb by Vs1.

In the second embodiment, since such image signal Sn is used to perform display, the scan lines are separated into odd-numbered rows and even-numbered rows which are constantly driven with the same potential polarities, in order to cope with the introduction of inter-row noise and/or rounding of the waveform of a scan signal due to the aforementioned parasitic capacitance. This arrangement makes it possible to further reduce adverse effects caused by the noise and/or waveform rounding. In the second embodiment, therefore, the middle-stage wave circuit in the first embodiment shown in Fig. 4 is separated into a section for the scan lines in the odd-numbered rows and a section for the scan lines in the even-numbered rows.

That is, as shown in Fig. 7, a first middle-stage wave circuit 862 supplies power-supply voltages to buffer circuits 854, 858, ... that are connected to the odd-numbered-row scan lines, and a second middle-stage wave circuit 864 supplies power-supply voltages to buffer circuits 856, 860, ... that are connected to even-numbered-row scan lines.

The first middle-stage wave circuit 862 has a configuration similar to that of the middle-stage wave circuit 550 described in the first embodiment, and generates a peak voltage Vc12 and an intermediate potential Vm2 from the power supply voltage Vc1 and the clock signal Vdd1. A specific value of the intermediate potential Vm2 may be empirically or experimentally determined by observing the state of flicker.

As shown in Fig. 6, for a first medium-stage wave Vp1 corresponding to the scan signal G1, time ta and time tb, in which the peak voltage Vc12 and the intermediate potential Vm2 are held, are set so as to reduce flicker. The scan signals G1, G3, G5, ... having respective two-stage waveforms 704, 708, 712, ... are supplied to the corresponding odd-numbered-row scan lines. On the other hand, scan signals G2, G4, ... having respective two-stage waveforms 706, 710, ..., which have a peak voltage Vcl3 and an intermediate potential Vm3, as a second middle-stage wave Vp2 are supplied to the corresponding even-numbered-row scan lines, as in the case of odd-numbered scan lines. A specific value of the intermediate potential Vm3 can also be experimentally or empirically determined by observing the state of flicker. In this manner, the intermediate potentials of the first and second middle-stage waves are set to be different from each other and the high potentials of the first and second middle-stage waves are set to be different from each other.

Even with the 1H inversion drive system, as described above, at the time of turning off the mth-row TFTs 30, even when a scan signal or the like in the (m+1)th row is introduced as noise due to the aforementioned parasitic capacitance, this embodiment can reduce the amount of variation in the pixel potentials, which are essentially to be held by the corresponding image electrodes 9a, using the scan signals G1, G2, ... having a two-stage waveform. Thus, pixel irregularities that occur in an image that is ultimately displayed can be reduced. In particular, flicker can be reduced at both the center portion and the peripheral portions of the image display area. Thus, eventually, it is possible to display a high-quality image having reduced pixel irregularities and flicker.

In the 1H inversion drive system in this embodiment, the polarity of the drive voltage may be inverted for each every row or may be inverted for every two adjacent rows or for every multiple number of rows.

### (Modifications)

Although the intermediate potentials are set by the D/A converter and the variable resistors in each embodiment described above, they may be set by detecting pixel irregularities and flicker before shipment or during normal operation, automatically generating a digital signal depending on the degree of detection, and inputting the digital signal to the D/A converter 520.

In each embodiment described above, the setting of the hold time of intermediate potentials of the scan signals having the two-stage waveform, i.e., the setting of time ta or time tb, is changed with the variable resistors 528 and 530. The time ta and time tb, however, may also be set by detecting pixel irregularities and flicker, automatically generating a digital signal depending on the degree thereof, inputting the digital signal to the D/A converter, and inputting the resulting output analog voltage to the pulse generator circuit 526.

In this manner, detecting pixel irregularities and flicker and controlling the two-stage waveform of the scan signals can advantageously cope with pixel irregularities and/or flicker resulting from product variations and aging.

Additionally, while the falling edge and the rising edge each have one intermediate potential in each embodiment described above, instead, setting multiple intermediate potentials to generate scan signals, each having a multi-stage waveform, can also provide similar advantages.

### (Entire configuration of Electro-Optical Device)

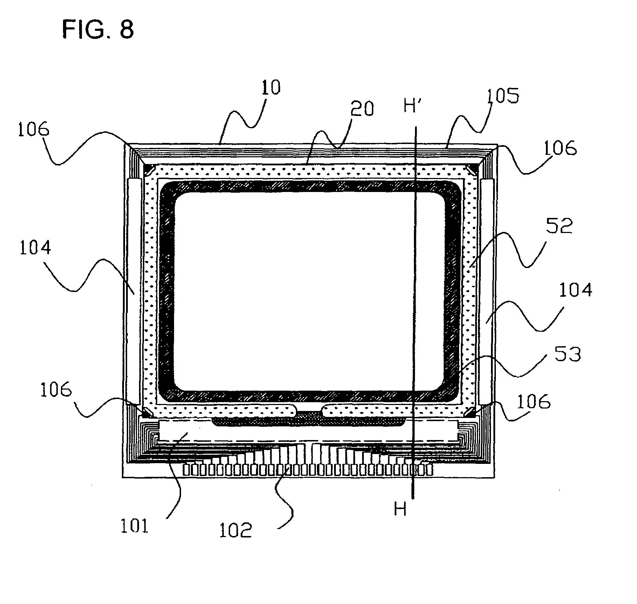

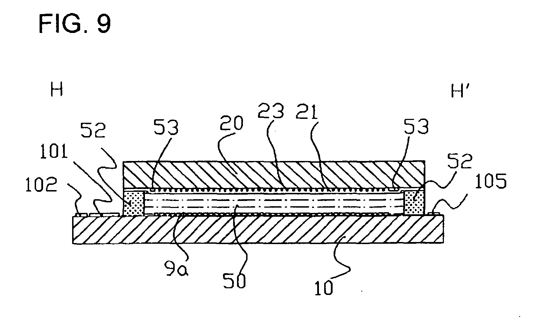

The entire configuration of the electro-optical device of each embodiment configured described above will now be described with reference to Figs. 8 and 9. Fig. 8 is a plan view of the TFT-array substrate 10 and individual elements formed thereon, viewed from the side of an opposing substrate 20. Fig. 9 is a cross-sectional view taken along the line H-H' shown in Fig. 8.

Referring to Fig. 8, a sealant 52 is provided on the TFT-array substrate 10 along the edge, and a light-shielding film 53 is provided in parallel to the inner side of the sealant 52 so as to serve as a frame defining the periphery of an image display area. The data-signal supply circuit 101 and an outer-circuit connecting terminal 102 are provided at regions outside the sealant 52 along one side of the TFT-array substrate 10. Along two sides adjacent to the one side is provided the scan-signal supply circuits 104. If delay of scan signals supplied to the scan lines 3a is not a problem, it goes without saying that the scan-signal supply circuit 104 may be provided at only one side. The data-signal supply circuits 101 may also be arranged at two sides along edges of the image display area. Along the remaining side of the TFT-array substrate 10 is provided a plurality of wires 105 for providing connections between the scan-signal supply circuits 104 provided at the opposing two sides of the image display area. A conductive material 106 is provided at at least one of the corner portions for the opposing substrate 20 to provide electrical connection between the TFT-array substrate 10 and the opposing substrate 20. As shown in Fig. 9, the opposing substrate 20, which has substantially the same contour as the sealant 52 shown in Fig. 8, is secured to the TFT-array substrate 10 with the sealant 52.

On the TFT-array substrate 10, a precharge circuit for supplying precharge signals, which precede image signals and have a predetermined voltage level, to the plurality of data lines 6a; and an inspection circuit for inspecting the quality, a defect, and the like of the electro-optical device during manufacture or shipment; and the like may also be provided, in addition to the data-signal supply circuit 101, the scan-signal supply circuit 104, and the like.

In the embodiments described above with reference to Figs. 1 to 9, instead of providing the data-signal supply circuit 101 and the scan-signal supply circuit 104 on the TFT-array substrate 10, for example, electrical and mechanical connection may be provided for a drive LSI that is mounted on a TAB (tape automated bonding) substrate via an anisotropic conductive film that is provided at the peripheral portion of the TFT-array substrate 10. Depending on the operation modes, such as a TN (twisted nematic) mode, STN (super twisted nematic) mode, VA (vertically aligned) mode, or PDLC (polymer dispersed liquid crystal) mode and a normally white mode or normally black mode, a polarizing film, a retardation film, a polarizer, or the like is arranged in a predetermined direction on one side, to which light enters, of the opposing substrate 20, and on one side, from which light is emitted, of the TFT-array substrate 10.

The electro-optical device according to the embodiments described above is applied to a projector and thus three electro-optical devices are used as respective light valves for RGB. Individual color light rays, which are divided by a dichroic mirror for dividing RGB colors, enter the corresponding light valves as projection light rays. Thus, in each embodiment, no color filter is provided on the opposing substrate 20. However, an RGB color filter, together with its protection film, may be formed on the opposing substrate 20 in a predetermined region that opposes the pixel electrode 9a. With this arrangement, the electro-optical device of each embodiment can be applied to a direct-viewing-type or reflective-type color electro-optical device, other than a projector. Micro-lenses may also be formed on the opposing substrate 20 such that each micro-lens corresponds to one pixel. Alternatively, a color filter layer can be formed with a color resist under the pixel electrodes 9a that oppose RGB elements on the TFT-array substrate 10. With this arrangement, the collection efficiency of incident light is enhanced, which can achieve a bright electro-optical device. In addition, a number of interference layers whose refractive indexes are different from each other may be deposited on the opposing substrate 20 to form a dichroic filter that creates RGB colors by utilizing light interference. The use of the opposing substrate with the dichroic filter can achieve a brighter color electro-optical device.

### (Embodiment of Electronic Apparatus)

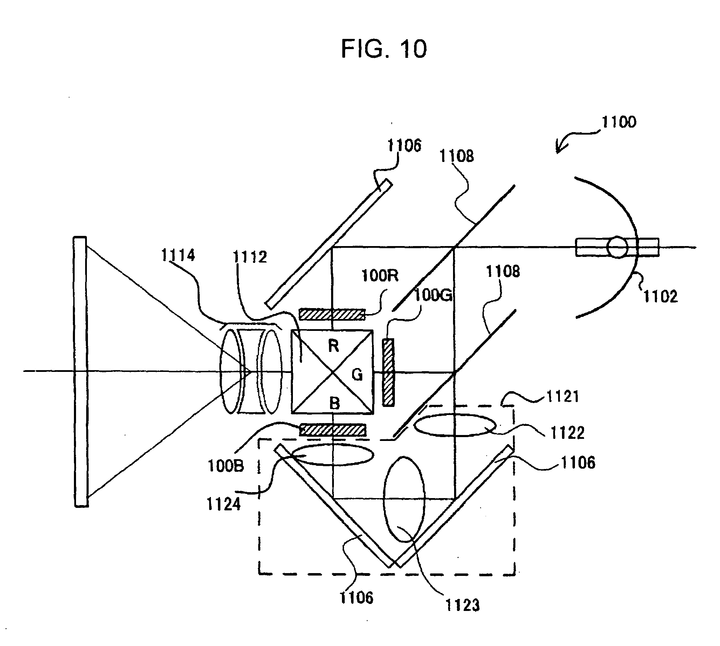

Next, a description is given to the entire configuration and, particularly, the optical configuration of an embodiment of a projection-type color display apparatus that is one example of an electronic apparatus using the electro-optical device detailed above as a light valve. Fig. 10 is a schematic sectional view of a projection-type color display apparatus.

Referring to Fig. 10, a liquid crystal projector 1100, which is one example of a projection-type color display apparatus of this embodiment, is configured in such a manner that three liquid-crystal modules, each including a liquid crystal device 100 in which a drive circuit is mounted on a TFT-array substrate, are prepared and used as light valves 100R, 100G, and 100B for respective RGB. In the liquid crystal projector 1100, when projection light is emitted from a lamp unit 1102 which includes a white light source such as a metal halide lamp, three mirrors 1106 and two dichroic mirrors 1108 divide the projection light into R, G, and B light components corresponding the three primary colors R, G, and B. The three R, G, and B light components are then introduced into the light valves 100R, 100G, and 100B, respectively. In this case, to prevent optical loss due to a long optical path, the B light ray is particularly introduced through a relay lens system 1121, which includes a light-entrance lens 1122, a relay lens 1123, and a light-emission lens 1124. Light components that are modulated by the corresponding light valves 100R, 100G, and 100B and that correspond to the three primary colors are again combined by a dichroic prism 1112. Subsequently, the resulting components are projected as a color image onto a screen via a projection lens 1114.

The present invention is not limited to the embodiments described above. The present invention, therefore, can be changed as appropriate without departing from the scope of the present invention which is defined by the appended claims.

## Claims

1. An electro-optical device, comprising:
a plurality of pixel electrodes that are arranged in a matrix above a substrate;
thin-film transistors that are provided on the substrate to control the switching of the pixel electrodes;
scan lines that are provided on the substrate to supply scan signals, for putting the thin-film transistors into an ON state or an OFF state, to the gates of the thin-film transistors;
data lines that are provided on the substrate to supply image signals to the pixel electrodes through the sources and the drains of the thin-film transistors when the thin-film transistors are put into the ON state; and
a scan-signal supply circuit that line-sequentially supplies the scan signals to the scan lines,
said electro-optical device being arranged such that:
in the process of changing the potential of the scan signals from a high potential, that puts the thin-film transistors into the ON state, to a low potential, that puts the thin-film transistors into the OFF state, and in the process of changing the potential of the scan signals from the low potential to the high potential, the scan-signal supply circuit holds the potential of the scan signals to an intermediate potential between the high potential and the low potential, and
said electro-optical device being **characterised in that** it is arranged such that of two scan signals sequentially supplied to the adjacent scan lines
the scan-signal supply circuit supplies the scan signals so that a period in which, the preceeding scan signal is changed from the intermediate potential to the low potential, and a period in which the following scan signal is changed from the low potential to the intermediate potential, overlap each other.

2. The electro-optical device according to claim 1, further **characterized in that**, in the process of changing the potential of the scan signals from the high potential to the low potential, the scan-signal supply circuit holds the potential of the scan signals to a plurality of potentials for respective predetermined periods, the plurality of potentials being different from each other and including the intermediate potential; and, in the process of changing the potential of the scan lines from the low potential to the high potential, the scan-signal supply circuit holds the potential of the scan signals to a plurality of potentials for respective predetermined periods, the plurality of potentials being different from each other and including the intermediate potential.

3. The electro-optical device according to claim 1, further **characterized in that** the scan-signal supply circuit includes a shift-register circuit, that sequentially outputs a transfer signal to the scan lines, and an output circuit, that line-sequentially outputs the scan signals to the scan lines in response to input of the transfer signal.

4. The electro-optical device according to claim 3, further **characterized in that** the output circuit comprises inverter circuits or buffer circuits which include complementary transistor circuits whose high potential sides are connected to the external power supply.

5. The electro-optical device according to claim 1, further comprising an opposing substrate, which opposes the substrate, and an electro-optic material layer, that is sandwiched between the substrate and the opposing substrate.

6. The electro-optical device according to claim 1, **characterized in that**:
settings of intermediate potentials of the scan signals for scan lines that are adjacent to each other are different from each other.

7. The electro-optical device according to claim 1, **characterized in that**:
settings of high potentials of the scan signals for scan lines that are adjacent to each other are different from each other.

8. A drive device for an electro-optical device, the drive device comprising:
a plurality of pixel electrodes that are arranged in a matrix above a substrate;
thin-film transistors that are provided on the substrate to control the switching of the pixel electrodes;
scan lines that are provided on the substrate to supply scan signals for putting the thin-film transistors into an ON state or an OFF state to the gates of the thin-film transistors; and
data lines that are provided above the substrate to supply image signals to the pixel electrodes through the sources and the drains of the thin-film transistors when the thin-film transistors are put into the ON state,
a scan-signal supply circuit that line-sequentially supplies the scan signals to the scan lines,
said drive device for an electro-optical device being arranged such that:
in the process of changing the potential of the scan signals from a high potential, that puts the thin-film transistors into the ON state, to a low potential, that puts the thin-film transistors into the OFF state, and in the process of changing the potential of the scan signals from the low potential to the high potential, the scan-signal supply circuit holds the potential of the scan signals to an intermediate potential between the high potential and the low potential, and
said drive device for an electro-optical device being **characterised in that** of two scan signals sequentially supplied to the adjacent scan lines,
the scan-signal supply circuit supplies the scan signals so that a period in which, the preceding signal is changed from the intermediate potential to the low potential, and a period in which the following scan signal is changed from the low potential to the intermediate potential, overlap each other.

9. A drive device according to claim 8, further **characterized in that** the scan-signal supply circuit includes a shift-register circuit, that sequentially outputs a transfer signal to the scan lines, and an output circuit, that line-sequentially outputs the scan signals to the scan lines in response to input of the transfer signal.

10. The drive device according to claim 8, further comprising an image-signal supply circuit that supplies the image signals to the data lines.

11. A method of driving an electro-optical device in which scan signals for putting the thin-film transistors into an ON state or an OFF state are supplied to the gates of thin-film transistors, the method comprising the steps of:
when the potential of at scan signal has to be brought from a low potential to a high potential, setting the potential, for a determinate period, to an intermediate potential;
after the determined period has exipred, setting the potential of said scan signal to a high potential;
when the potential of a scan signal has to be brought from a high potential to a low potential, setting the potential, for a determinate period, to an intermediate potential;
after the determined period has exipred, setting the potential of said scan signals to a low potential;
said drive method **characterized in that**
the period in which the scan signal potential of a determined scan line is changed from the intermediate potential to the low potential, and the period in which the scan signal potential of a scan line which is adjacent to said determined scan line is changed from the low potential to the intermediate potential overlap each other.

12. The drive method according to claim 11, wherein:
settings of intermediate potentials of the scan signals for scan lines that are adjacent to each other are different from each other.

13. The drive method according to claim 11, wherein:
settings of high potentials of the scan signals for scan lines that are adjacent to each other are different from each other.

14. An electronic apparatus comprising the electro-optical device according to one of claims 1 to 7.

## Patentansprüche

1. Elektro-optische Vorrichtung, umfassend:
eine Mehrzahl von Pixelelektroden, die in einer Matrix über einem Substrat angeordnet sind;
Dünnfilmtransistoren, die auf dem Substrat zum Steuern des Umschaltens der Pixelelektroden bereitgestellt sind;
Abtastleitungen, die auf dem Substrat zum Zuleiten von Abtastsignalen zu den Gates der Dünnfilmtransistoren bereitgestellt sind, um die Dünnfilmtransistoren in einen EIN-Zustand oder einen AUS-Zustand zu bringen;
Datenleitungen, die auf dem Substrat zum Zuleiten von Bildsignalen zu den Pixelelektroden durch die Sources und die Drains der Dünnfilmtransistoren bereitgestellt sind, wenn die Dünnfilmtransistoren in den EIN-Zustand gebracht werden; und
eine Abtastsignalzuleitungsschaltung, die in der Reihenfolge der Leitungen die Abtastsignale zu den Abtastleitungen leitet,
wobei die elektro-optische Vorrichtung derart angeordnet ist, dass:
in dem Verfahren zum Ändern des Potenzials der Abtastsignale von einem hohen Potenzial, das die Dünnfilmtransistoren in den EIN-Zustand bringt, auf ein niederes Potenzial, das die Dünnfilmtransistoren in den AUS-Zustand bringt, und in dem Verfahren zum Ändern des Potenzials der Abtastsignale von dem niederen Potenzial auf das hohe Potenzial, die Abtastsignalzuleitungsschaltung das Potenzial der Abtastsignale auf einem mittleren Potenzial zwischen dem hohen Potenzial und dem niederen Potenzial hält, und
wobei die elektro-optische Vorrichtung **dadurch gekennzeichnet ist, dass** sie derart angeordnet ist, dass von zwei Signalen, die der Reihe nach zu den benachbarten Abtastleitungen geleitet werden, die Abtastsignalzuleitungsschaltung die Abtastsignale so zuleitet, dass eine Periode, in der das vorangehende Abtastsignal von dem mittleren Potenzial zu dem niederen Potenzial geändert wird, und eine Periode, in der das folgende Abtastsignal von dem niederen Potenzial auf das mittlere Potenzial geändert wird, einander überlappen.

2. Elektro-optische Vorrichtung nach Anspruch 1, des Weiteren **dadurch gekennzeichnet, dass** in dem Verfahren zum Ändern des Potenzials der Abtastsignale von dem hohen Potenzial auf das niedere Potenzial die Abtastsignalzuleitungsschaltung das Potenzial der Abtastsignale auf einer Mehrzahl von Potenzialen für jeweils vorbestimmte Perioden hält, wobei sich die Mehrzahl der Potenziale voneinander unterscheiden und das mittlere Potenzial enthalten; und in dem Verfahren zum Ändern des Potenzials der Abtastsignale von dem niederen Potenzial auf das hohe Potenzial die Abtastsignalzuleitungsschaltung das Potenzial der Abtastsignale auf einer Mehrzahl von Potenzialen für jeweils vorbestimmte Perioden hält, wobei sich die Mehrzahl der Potenziale voneinander unterscheiden und das mittlere Potenzial enthalten.

3. Elektro-optische Vorrichtung nach Anspruch 1, des Weiteren **dadurch gekennzeichnet, dass** die Abtastsignalzuleitungsschaltung eine Schieberegisterschaltung enthält, die der Reihe nach ein Übertragungssignal an die Abtastleitungen ausgibt, und eine Ausgangsschaltung, die in der Reihenfolge der Leitungen die Abtastsignale an die Abtastleitungen als Reaktion auf die Eingabe des Übertragungssignals ausgibt.

4. Elektro-optische Vorrichtung nach Anspruch 3, des Weiteren **dadurch gekennzeichnet, dass** die Ausgangsschaltung Inverterschaltungen oder Pufferschaltungen umfasst, die komplementäre Transistorschaltungen enthalten, deren Hochpotenzialseiten an die externe Energieversorgung angeschlossen sind.

5. Elektro-optische Vorrichtung nach Anspruch 1, des Weiteren umfassend ein Gegensubstrat, das dem Substrat gegenüber liegt, und eine elektro-optische Materialschicht, die zwischen dem Substrat und dem Gegensubstrat liegt.

6. Elektro-optische Vorrichtung nach Anspruch 1, **dadurch gekennzeichnet, dass**:
sich Einstellungen von mittleren Potenzialen der Abtastsignale für Abtastleitungen, die nebeneinander liegen, voneinander unterscheiden.

7. Elektro-optische Vorrichtung nach Anspruch 1, **dadurch gekennzeichnet, dass**:
sich Einstellungen von hohen Potenzialen der Abtastsignale für Abtastleitungen, die nebeneinander liegen, voneinander unterscheiden.

8. Ansteuervorrichtung für eine elektro-optische Vorrichtung, wobei die Ansteuervorrichtung umfasst:
eine Mehrzahl von Pixelelektroden, die in einer Matrix über einem Substrat angeordnet sind;
Dünnfilmtransistoren, die auf dem Substrat zum Steuern des Umschaltens der Pixelelektroden bereitgestellt sind;
Abtastleitungen, die auf dem Substrat zum Zuleiten von Abtastsignalen zu den Gates der Dünnfilmtransistoren bereitgestellt sind, um die Dünnfilmtransistoren in einen EIN-Zustand oder einen AUS-Zustand zu bringen;
Datenleitungen, die auf dem Substrat zum Zuleiten von Bildsignalen zu den Pixelelektroden durch die Sources und die Drains der Dünnfilmtransistoren bereitgestellt sind, wenn die Dünnfilmtransistoren in den EIN-Zustand gebracht werden; und
eine Abtastsignalzuleitungsschaltung, die in der Reihenfolge der Leitungen die Abtastsignale zu den Abtastleitungen leitet,
wobei die Ansteuerschaltung für eine elektro-optische Vorrichtung derart angeordnet ist, dass:
in dem Verfahren zum Ändern des Potenzials der Abtastsignale von einem hohen Potenzial, das die Dünnfilmtransistoren in den EIN-Zustand bringt, auf ein niederes Potenzial, das die Dünnfilmtransistoren in den AUS-Zustand bringt, und in dem Verfahren zum Ändern des Potenzials der Abtastsignale von dem niederen Potenzial auf das hohe Potenzial, die Abtastsignalzuleitungsschaltung das Potenzial der Abtastsignale auf einem mittleren Potenzial zwischen dem hohen Potenzial und dem niederen Potenzial hält, und
wobei die Ansteuervorrichtung für eine elektro-optische Vorrichtung **dadurch gekennzeichnet ist, dass** von zwei Signalen, die der Reihe nach zu den benachbarten Abtastleitungen geleitet werden, die Abtastsignalzuleitungsschaltung die Abtastsignale so zuleitet, dass eine Periode, in der das vorangehende Abtastsignal von dem mittleren Potenzial auf das niedere Potenzial geändert wird, und eine Periode, in der das folgende Abtastsignal von dem niederen Potenzial auf das mittlere Potenzial geändert wird, einander überlappen.

9. Ansteuervorrichtung nach Anspruch 8, des Weiteren **dadurch gekennzeichnet, dass**, dass die Abtastsignalzuleitungsschaltung eine Schieberegisterschaltung enthält, die der Reihe nach ein Übertragungssignal an die Abtastleitungen ausgibt, und eine Ausgangsschaltung, die die in der Reihenfolge der Leitungen die Abtastsignale an die Abtastleitungen als Reaktion auf die Eingabe des Übertragungssignals ausgibt.

10. Ansteuervorrichtung nach Anspruch 8, des Weiteren umfassend eine Bildsignalzuleitungsschaltung, die die Bildsignale zu den Datenleitungen leitet.

11. Verfahren zum Ansteuern einer elektro-optischen Vorrichtung, in der Abtastsignale, die die Dünnfilmtransistoren in einen EIN-Zustand oder einen AUS-Zustand bringen, zu den Gates der Dünnfilmtransistoren geleitet werden, wobei das Verfahren folgende Schritte umfasst:
wenn das Potenzial eines Abtastsignals von einem niederen Potenzial auf ein hohes Potenzial gebracht werden soll, Einstellen des Potenzials für eine bestimmte Periode auf ein Zwischenpotenzial;
sobald die bestimmte Periode verstrichen ist, Einstellen des Potenzials des Abtastsignals auf ein hohes Potenzial;
wenn das Potential eines Abtastsignals von einem hohen Potenzial auf ein niederes Potenzial gebracht werden soll, Einstellen des Potenzials für eine bestimmte Periode auf ein Zwischenpotenzial;
sobald die bestimmte Periode verstrichen ist, Einstellen des Potenzials der Abtastsignale auf ein niederes Potenzial;
wobei das Ansteuerverfahren **dadurch gekennzeichnet ist, dass**
die Periode, in der das Abtastsignalpotenzial einer bestimmten Abtastleitung von dem Zwischenpotenzial auf das niedere Potenzial geändert wird, und die Periode, in der das Abtastsignalpotenzial einer Abtastleitung, die neben der bestimmten Abtastleitung liegt, von dem niederen Potenzial auf das Zwischenpotenzial geändert wird, einander überlappen.

12. Ansteuerverfahren nach Anspruch 11, wobei:
Einstellungen der Zwischenpotenziale der Abtastsignale für Abtastleitungen, die nebeneinander liegen, sich voneinander unterscheiden.

13. Ansteuerverfahren nach Anspruch 11, wobei:
Einstellungen hoher Potenziale der Abtastsignale für Abtastleitungen, die nebeneinander liegen, sich voneinander unterscheiden.

14. Elektro-optisches Gerät, umfassend die elektro-optische Vorrichtung nach einem der Ansprüche 1 bis 7.

## Revendications

1. Dispositif électro-optique comprenant :
une pluralité d'électrodes de pixel qui sont disposées en matrice au-dessus d'un substrat;
des transistors à couche mince fournis sur le substrat afin de contrôler la commutation des électrodes de pixel ;
des lignes de balayage fournies sur le substrat afin de fournir des signaux de balayage, pour faire passer les transistors à couche mince dans un état ALLUME ou un état ETEINT, aux grilles des transistors à couche mince ;
des lignes de données fournies sur le substrat pour fournir des signaux d'image aux électrodes de pixel par l'intermédiaire des sources et des drains des transistors à couche mince lorsque les transistors à couche mince passent à un état ALLUME ; et
un circuit de fourniture de signaux de balayage, lequel fournit de manière séquentielle ligne par ligne les signaux de balayage aux lignes de balayage,
ledit dispositif électro-optique étant étudié de manière à ce que:
lors du processus de changement de potentiel des signaux de balayage pour passer d'un potentiel élevé, lequel fait passer les transistors à couche mince à l'état ALLUME, à un potentiel bas, lequel fait passer les transistors à couche mince à l'état ETEINT, et lors du processus de changement du potentiel des signaux de balayage du potentiel bas vers le potentiel élevé, le circuit de fourniture de signaux de balayage maintient le potentiel des signaux de balayage à un potentiel intermédiaire entre le potentiel élevé et le potentiel bas, et
ledit dispositif électro-optique **se caractérisant en ce qu'**il est étudié de manière à ce que, pour deux signaux de balayage fournis de manière séquentielle aux lignes de balayage adjacentes, le circuit de fourniture de signaux de balayage fournit les signaux de balayage de manière à ce qu'une période au cours de laquelle le signal de balayage précédent change pour passer du potentiel intermédiaire au potentiel bas, et une période au cours de laquelle le signal de balayage suivant change pour passer du potentiel bas au potentiel intermédiaire, se superposent l'une l'autre.

2. Dispositif électro-optique selon la revendication 1, **caractérisé par** ailleurs en ce que, lors du processus de changement de potentiel des signaux de balayage pour passer du potentiel élevé au potentiel bas, le circuit de fourniture de signaux de balayage maintient le potentiel des signaux de balayage à une pluralité de potentiels pour des périodes prédéterminées respectives, la pluralité des potentiels étant différents les uns des autres et comprenant le potentiel intermédiaire ; et, lors du processus de changement de potentiel des lignes de balayage pour passer du potentiel bas au potentiel élevé, le circuit de fourniture de signaux de balayage maintenant le potentiel des signaux de balayage à une pluralité de potentiels pour des périodes prédéterminées respectives, la pluralité des potentiels étant différents les uns des autres et comprenant le potentiel intermédiaire.

3. Dispositif électro-optique selon la revendication 1, **se caractérisant par** ailleurs en ce que le circuit de fourniture de signaux de balayage comprend un circuit de registre à décalage, lequel émet de manière séquentielle un signal de transfert pour les lignes de balayage, et un circuit de sortie, lequel émet de manière séquentielle, ligne par ligne, les signaux de balayage à l'attention des lignes de balayage en réponse à l'entrée du signal de transfert.

4. Dispositif électro-optique selon la revendication 3, **se caractérisant par** ailleurs en ce que le circuit de sortie comprend des circuits d'inversion ou des circuits tampon comprenant des circuits de transistor complémentaires dont les côtés à potentiel élevé sont connectés au bloc d'alimentation externe.

5. Dispositif électro-optique selon la revendication 1, comprenant par ailleurs un substrat opposé, lequel est opposé au substrat, et une couche de matière électro-optique, laquelle est prise en sandwich entre le substrat et le substrat opposé.

6. Dispositif électro-optique selon la revendication 1, **caractérisé en ce que** :
des ajustements de potentiels intermédiaires des signaux de balayage pour des lignes de balayage lesquelles sont adjacentes les unes des autres sont différents les uns des autres.

7. Dispositif électro-optique selon la revendication 1, **caractérisé en ce que** :
des ajustements de potentiels élevés des signaux de balayage pour des lignes de balayage qui sont adjacentes les unes des autres sont différents les uns des autres.

8. Dispositif de commande pour un dispositif électro-optique, le dispositif de commande comprenant :
une pluralité d'électrodes de pixel disposées en matrice au-dessus du substrat ;
des transistors à couche mince fournis sur le substrat afin de contrôler la commutation des électrodes de pixel ;
des lignes de balayage fournies sur le substrat pour fournir des signaux de balayage, afin de faire passer les transistors à couche mince dans un état ALLUME ou un état ETEINT, aux grilles des transistors à couche mince ; et
des lignes de données fournies au-dessus du substrat pour fournir des signaux d'image aux électrodes de pixel par l'intermédiaire des sources et des drains des transistors à couche mince lorsque l'on fait passer les transistors à couche mince à un état ALLUME,
un circuit de fourniture de signaux de balayage lequel fournit de manière séquentielle, ligne par ligne, les signaux de balayage aux lignes de balayage ;
ledit dispositif de commande pour un dispositif électro-optique **se caractérisant en ce que** :
lors du processus de changement de potentiel des signaux de balayage pour passer d'un potentiel élevé, lequel fait passer les transistors à couche mince à l'état ALLUME, à un potentiel bas, lequel fait passer les transistors à couche mince à l'état ETEINT, et lors du processus de changement du potentiel des signaux de balayage du potentiel bas vers le potentiel élevé, le circuit de fourniture de signaux de balayage maintient le potentiel des signaux de balayage à un potentiel intermédiaire entre le potentiel élevé et le potentiel bas, et
ledit dispositif de commande pour un dispositif électro-optique **se caractérisant en ce que**, pour deux signaux de balayage fournis de manière séquentielle aux lignes de balayage adjacentes, le circuit de fourniture de signaux de balayage fournit les signaux de balayage de manière à ce qu'une période au cours de laquelle le signal de balayage précédent change pour passer du potentiel intermédiaire au potentiel bas, et une période au cours de laquelle le signal de balayage suivant change pour passer du potentiel bas au potentiel intermédiaire, superposent l'une l'autre.

9. Dispositif de commande selon la revendication 8, **se caractérisant par** ailleurs en ce que le circuit de fourniture de signaux de balayage comprend un circuit de registre à décalage, lequel émet de manière séquentielle un signal de transfert pour les lignes de balayage, et un circuit de sortie, lequel émet de manière séquentielle, ligne par ligne, les signaux de balayage à l'attention des lignes de balayage en réponse à l'entrée du signal de transfert.

10. Dispositif de commande selon la revendication 8, comprenant par ailleurs un circuit de fourniture de signaux d'image lequel fournit les signaux d'image aux lignes de données.

11. Procédé de commande pour un dispositif électro-optique avec lequel des signaux de balayage pour faire passer les transistors à couche mince à un état ALLUME ou un état ETEINT sont fournis aux grilles des transistors à couche mince, le procédé comprenant les étapes suivantes :
lorsque l'on doit faire passer le potentiel d'un signal de balayage d'un potentiel bas à un potentiel élevé, on fixe le potentiel à un potentiel intermédiaire pendant une période déterminée ;
à l'expiration de la période déterminée, le potentiel dudit signal de balayage étant fixé à un potentiel élevé ;
lorsque l'on doit faire passer le potentiel d'un signal de balayage d'un potentiel élevé à un potentiel bas, on fixe le potentiel à un potentiel intermédiaire pendant une période déterminée ;
à l'expiration de la période déterminée, le potentiel desdits signaux de balayage étant fixé à un potentiel bas ;
ledit procédé de commande **se caractérisant en ce que** :
la période au cours de laquelle le potentiel du signal de balayage d'une ligne de balayage déterminée change pour passer du potentiel intermédiaire au potentiel bas, et la période au cours de laquelle le potentiel du signal de balayage d'une ligne de balayage adjacente à ladite ligne de balayage déterminée change pour passer du potentiel bas au potentiel intermédiaire, se superposent l'une l'autre.

12. Procédé de commande selon la revendication 11,
des réglages de potentiels intermédiaires des signaux de balayage pour des lignes de balayage adjacentes l'une de l'autre étant différents l'un de l'autre.

13. Procédé de commande selon la revendication 11,
des réglages de potentiels élevés des signaux de balayage pour des lignes de balayage adjacentes l'une de l'autre étant différents l'un de l'autre.

14. Appareil électronique comprenant le dispositif électro-optique selon l'une des revendications 1 à 7.
